# EUROPÄISCHE PATENTSCHRIFT

(11) **EP 3 077 200 B1**
(45) Veröffentlichungstag und Bekanntmachung des Hinweises auf die Patenterteilung: **14.02.2024**
(21) Anmeldenummer: 14798727.5
(22) Anmeldetag: 30.10.2014
(51) Int. Cl.: B32B 7/12, B32B 27/00, C08F 290/04, C09J 151/00, C08F 220/18

(54) **MEHRPHASIGE POLYMERZUSAMMENSETZUNG**
MULTI-PHASE POLYMER COMPOSITION
COMPOSITION POLYMÈRE MULTIPHASE

(30) Priorität: 03.12.2013 DE 102013224773
(43) Veröffentlichungstag der Anmeldung: 12.10.2016
(73) Patentinhaber: tesa SE, 22848 Norderstedt (DE)
(72) Erfinder: PAPENBROOCK, Marten, 20253 Hamburg (DE); PRENZEL, Alexander, 22529 Hamburg (DE)
(74) Vertreter: tesa SE
(86) Internationale Anmeldenummer: PCT/EP2014/073307
(87) Internationale Veröffentlichungsnummer: WO 2015/082143

(56) Entgegenhaltungen:
- EP-A1- 1 211 269
- EP-A1- 2 479 231
- DE-T2- 69 424 423
- DE-T5- 10 297 685

## Beschreibung

### Technisches Gebiet der Erfindung

Die vorliegende Erfindung betrifft eine mehrphasige Polymerzusammensetzung umfassend ein Kammcopolymer (A), das eine kontinuierliche Acrylatphase und eine diskontinuierliche Kohlenwasserstoffphase ausbildet, sowie wenigstens eine in der Kohlenwasserstoffphase des Kammcopolymers (A) lösliche Kohlenwasserstoffverbindung (B), sowie, optional, weitere Additive. Die vorliegende Erfindung betrifft ferner Haftklebmassen, umfassend die erfindungsgemäße mehrphasige Polymerzusammensetzung sowie die Verwendung dieser Haftklebmasse zur Verklebung von Gegenständen, insbesondere zur Verklebung von Gegenständen mit unpolaren Oberflächen. Ebenfalls beschrieben wird ein Verfahren zum Herstellen der mehrphasigen Polymerzusammensetzung.

### Allgemeiner Stand der Technik

Haftklebrige Polymerzusammensetzungen auf Basis von Acrylaten sind aus dem Stand der Technik bekannt. Acrylat-basierte Klebmassen sind aufgrund ihrer Chemikalienbeständigkeit besonders für die Verklebung in industriellen Anwendungen geeignet, und die im Stand der Technik beschriebenen Polymerzusammensetzungen finden Anwendung bei der Verklebung verschiedener Substrate. Nachteil der bekannten Zusammensetzungen ist jedoch, dass ihre Anwendung auf Substraten mit Oberflächen niedriger Energie (sogenannte "low surface energy" Materialien, im folgenden auch "LSE"-Materialien) schwierig ist. Dies äußert sich einerseits in der Klebkraft der bekannten Haftklebmassen auf unpolaren Substraten wie Polypropylen oder mit LSE-Lack beschichtetem Stahl, sowie, andererseits, in der Geschwindigkeit, mit der die maximalen Klebkräfte erzielt werden. Als Hauptursache für die niedrigen Klebkräfte bekannter Acrylatbasierter Haftklebmassen auf unpolaren Oberflächen wird der Unterschied der Oberflächenenergien der bekannten Polymerzusammensetzungen und der LSE-Materialien sowie das Fehlen geeigneter Anknüpfungspunkte innerhalb der LSE-Oberflächen für kovalente oder stark nicht-kovalente Bindungen betrachtet. Die Adhäsion zwischen bekannten, acrylatbasierten Polymerzusammensetzungen und LSE-Oberflächen beruht insofern im Wesentlichen auf schwächeren van-der-Waals-Kräften.

Ein Ansatz zum Ausbilden höherer Klebkräfte zwischen LSE-Oberflächen und Polymerzusammensetzungen auf Basis von Polyacrylaten besteht in der Verwendung von Klebharzen. Ein anderer Ansatz verwendet sogenannte Primer, d.h. Haftvermittler, um die Oberflächenenergie der LSE-Substrate anzuheben. Während der Einsatz von Primern aufwendig ist, führt die Verwendung von Klebharzen zu einer Abnahme der Kohäsion der Polymerzusammensetzung, was zu einem Bruch der Verbindung unter Last führen kann.

US 2010/0266837 A1 offenbart vor diesem Hintergrund Haftklebmassen, umfassend ein Kammcopolymer und eine Kohlenwasserstoffverbindung mit einem Molekulargewicht von wenigstens 1.000 g/mol. Die Ergebnisse dieser im Stand der Technik beschriebenen Haftklebmassen sind jedoch noch immer nicht befriedigend, und es besteht ein grundsätzlicher Bedarf an Haftklebmassen, die gute Klebkräfte auf unpolaren Oberflächen aufweisen, ohne dass Kompromisse hinsichtlich der Kohäsion gemacht werden müssten. Solche Haftklebmassen sollten ferner eine gute Chemikalienbeständigkeit aufweisen und hohe Klebkräfte bereits nach kurzer Zeit ausbilden.

DE 102 97 685 T5 beschreibt einen Haftkleber, der ein Acrylpolymer umfasst, welches mit einem Kautschukmacromer gepfropft ist. Das Polymer umfasst mindestens ein Alkylacrylatmonomer, das etwa 4 bis etwa 18 Kohlenstoffatome in der Alkylgruppe enthält, und mindestens ein Monomer, das eine Glasubergangstemperatur von über etwa 0°C hat.

EP 1 211 269 A1 offenbart ein acrylisches Copolymer, das über eine Copolymerisation von
a) einem Alkyl(meth)acrylatester mit 1 bis 14 C-Atomen im Alkylrest,
b) einem olefinischen Polymer oder Copolymer, das an seinen Enden mit einer frei radikalisch polymerisierbaren, ungesättigten Doppelbindung modifiziert ist, und
c) einem Polymer, das an seinen Enden mit einer frei radikalisch polymerisierbaren, ungesättigten Doppelbindung modifiziert ist, ein zahlenmittleres Molekulargewicht von 2.000 bis 30.000 hat und eine Glasübergangstemperatur von mindestens 30 °C aufweist,
hergestellt ist.

Gegenstand von EP 2 479 231 A1 ist eine Haftklebmasse, die
- ein Acrylat-Kohlenwasserstoff-Pfropfcopolymer, welches ein acrylisches Monomer copolymerisiert mit einem Kohlenwasserstoff-Makromonomer und
- mindestens eine Komponente ausgewählt aus einem Kohlenwasserstoff-Oligomer und einem Kohlenwasserstoff-Polymer oder beide
umfasst.

DE 694 24 423 T2 beschreibt ein haftklebendes, kammartiges Pfropfcopolymer, das erhältlich ist durch Polymerisieren eines acrylischen Monomersystems aufweisend wenigstens einen Alkylacrylatester, der zwischen 4 und 8 Kohlenstoffatomen enthält, in Gegenwart eines Makromers ausgewählt aus der Gruppe bestehend aus Ethylen-Butylen- und Ethylen-Propylenmakromeren und Mischungen daraus, wobei jedes der Makromeren ein Molekulargewicht von 2.000 bis 30.000, eine Glasübergangstemperatur von weniger als 0 °C und eine terminale reaktive Gruppe, welche ein Acrylat oder Methacrylat ist, hat.

### Aufgabe der vorliegenden Erfindung

Der vorliegenden Erfindung liegt insofern die Aufgabe zugrunde, eine verbesserte Polymerzusammensetzung bereitzustellen.

### Zusammenfassung der vorliegenden Erfindung

Die vorliegende Erfindung adressiert diese Aufgabe und die Probleme des Standes der Technik, indem eine mehrphasige Polymerzusammensetzung bereitgestellt wird, umfassend
- ein Kammcopolymer (A), das erhältlich ist durch Polymerisation eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
- und wenigstens eine in der Kohlenwasserstoffphase Kw des Kammcopolymers (A) lösliche Kohlenwasserstoffverbindung (B),
wobei die mehrphasige Polymerzusammensetzung eine kontinuierliche Acrylatphase mit einer statischen Glasübergangstemperatur Tg(Ac), gemessen nach der DSC Methode(Messmethode A-2), und eine diskontinuierliche Kohlenwasserstoffphase Kw1 mit einer statischen Glasübergangstemperatur Tg(Kw1), gemessen nach der DSC Methode (Messmethode A-2), aufweist, und wobei sich die statischen Glasübergangstemperaturen der Polymerzusammensetzung Tg(Kw) und Tg(Ac) um 35 bis 60 Kelvin, bevorzugt um 40 bis 60 Kelvin, noch bevorzugter um 45 bis 60 Kelvin unterscheiden.

Die statische Glasübergangstemperatur der diskontinuierlichen Kohlenwasserstoffphase Kw1 innerhalb der Polymerzusammensetzung, Tg(Kw1), liegt bevorzugt in einem Bereich von
-5 bis +15 °C, bevorzugter 0 bis +10 °C. Die statische Glasübergangstemperatur der kontinuierlichen Acrylatphase innerhalb der Polymerzusammensetzung, Tg(Ac), liegt bevorzugt unterhalb von -10 °C, bevorzugter in einem Bereich von -60 bis -20 °C, besonders bevorzugt in einem Bereich von -50 bis -30 °C.

Die vorliegende Erfindung betrifft ferner Verfahren zum Herstellen der mehrphasigen Polymerzusammensetzung, umfassend die Schritte
- Polymerisieren eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer Acrylat-Hauptkette und Kohlenwasserstoff-Seitenketten;
- Mischen des so erhaltenen Kammcopolymers (A) mit wenigstens einer Kohlenwasserstoffverbindung (B), die mit den Kohlenwasserstoff-Seitenketten des Kammcopolymers (A) kompatibel ist;
- sowie, optional, das Vernetzen reaktiver, funktioneller Gruppen.

Das hierin beschriebene Kammcopolymer (A) bildet eine kontinuierliche Acrylatphase und eine diskontinuierliche Kohlenwasserstoffphase Kw aus, sobald eine Vielzahl von Polymerketten einzelner Kammcopolymer-Moleküle miteinander in Kontakt kommen, beispielsweise nach Entfernen eines Lösungsmittels. Hierbei assoziieren sich die Acrylat-Hauptketten und die Kohlenwasserstoff-Seitenketten derart, dass eine kontinuierliche Acrylatphase und eine diskontinuierliche Kohlenwasserstoffphase entstehen.

Die erfindungsgemäßen, mehrphasigen Polymerzusammensetzungen weisen wenigstens zwei Phasen, nämlich wenigstens eine Kohlenwasserstoff-Phase Kw1 und eine Acrylatphase auf. Dass diese Phasen vorliegen, ergibt sich aus der Bestimmung der statischen Glasübergangstemperaturen der Polymerzusammensetzung mittels DSC. Alternativ hierzu oder ergänzend kann das Vorliegen der unterschiedlichen Phasen mittels Dynamisch Mechanischer Analyse (DMA) (Messmethode A3) nachgewiesen werden. Hierbei werden in einer sogenannten temperature sweep-Messung zwei oder mehrere Glasübergänge gemessen, die sich aus den einzelnen Bestandteilen der Zusammensetzung ergeben.

Die kontinuierliche Acrylatphase der Polymerzusammensetzung weist eine statische Glasübergangstemperatur Tg(Ac), gemessen nach der DSC Methode (Messmethode A-2), und die diskontinuierliche Kohlenwasserstoffphase Kw1 weist eine statische Glasübergangstemperatur Tg(Kw1), gemessen nach der DSC Methode (Messmethode A-2), auf. Die statischen Glasübergangstemperaturen der Polymerzusammensetzung Tg(Kw1) und Tg(Ac) unterscheiden sich um 35 bis 60 Kelvin, bevorzugt um 40 bis 60 Kelvin, noch bevorzugter um 45 bis 60 Kelvin.

Aufgrund der besonderen Kombination des Kammcopolymers (A) und der Kohlenwasserstoffverbindung (B), die in der Kohlenwasserstoffphase des Kammcopolymers (A) löslich ist, ist die Zusammensetzung trotz der unterschiedlichen Phasen stabil, das heißt es kommt zu keiner makroskopischen Phasentrennung in das Kammcopolymer (A) einerseits und die wenigstens eine Kohlenwasserstoffverbindung (B) andererseits.

Die erfindungsgemäßen mehrphasigen Polymerzusammensetzungen haben sich als besonders geeignet bei der Verklebung von Gegenständen mit LSE-Oberflächen erwiesen. Sie sind ferner chemikalien- und UV-beständig und zeigen sowohl bei Raumtemperatur (25°C) als auch bei hohen Temperaturen eine hohe Kohäsion, was sich in hohen Scherfestigkeiten äußert. Überraschender Weise gewährleisten die Polymerzusammensetzungen trotzdem ein schnelles Auffließen auf Oberflächen von Gegenständen niedriger Energie und mit LSE-Lacken beschichteten Oberflächen sowie auf anderen LSE-Materialien, was die Ausbildung hoher Klebkräfte nach kurzer Zeit ermöglicht. Die erfindungsgemäßen mehrphasigen Polymerzusammensetzungen erlauben ferner die Bereitstellung transparenter Haftklebmassen. In einem weiteren Aspekt betrifft die vorliegende Erfindung insofern Haftklebmassen, bevorzugt transparente Haftklebmassen, umfassend die hierin beschriebene mehrphasige Polymerzusammensetzung. Ferner wird die Verwendung der Haftklebmasse zur Verklebung von Gegenständen, insbesondere zur Verklebung von Gegenständen mit niedrigen Oberflächenenergien (LSE-Materialien) beschrieben. Unter solchen LSE-Materialien werden im Sinne der vorliegenden Erfindung auch Materialien verstanden, die eigentlich keine LSE-Materialien darstellen, deren Oberflächen sich jedoch gegenüber Klebmassen aufgrund einer Beschichtung, z.B. mit einer Schicht eines LSE-Lackes, wie LSE-Materialien verhalten.

### Detaillierte Beschreibung der Erfindung

Erfindungsgemäß wird die oben beschriebene Aufgabe gelöst durch eine mehrphasige Polymerzusammensetzung, umfassend
- ein Kammcopolymer (A), das erhältlich ist durch Polymerisation eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
- und wenigstens eine in der Kohlenwasserstoffphase Kw des Kammcopolymers (A) lösliche Kohlenwasserstoffverbindung (B),
wobei die mehrphasige Polymerzusammensetzung eine kontinuierliche Acrylatphase mit einer statischen Glasübergangstemperatur Tg(Ac), gemessen nach der DSC Methode, und eine diskontinuierliche Kohlenwasserstoffphase Kw1 mit einer statischen Glasübergangstemperatur Tg(Kw1), gemessen nach der DSC Methode, aufweist, und wobei sich die statischen Glasübergangstemperaturen der Polymerzusammensetzung Tg(Kw1) und Tg(Ac) um 35 bis 60 Kelvin, bevorzugt um 40 bis 60 Kelvin, noch bevorzugter um 45 bis 60 Kelvin unterscheiden.

In einer bevorzugten Ausführungsform ist die hierin beschriebene Polymerzusammensetzung dadurch gekennzeichnet, dass die statische Glasübergangstemperatur der diskontinuierlichen Kohlenwasserstoffphase innerhalb der Polymerzusammensetzung, Tg(Kw1), in einem Bereich von -5 bis +15 °C, bevorzugt 0 bis +10 °C liegt. Ebenfalls bevorzugt liegt die statische Glasübergangstemperatur der kontinuierlichen Acrylatphase innerhalb der Polymerzusammensetzung, Tg(Ac), unterhalb von -10 °C, bevorzugt in einem Bereich von -60 bis -20 °C, bevorzugter in einem Bereich von -50 bis -30 °C.

Geeignete Polymerzusammensetzungen sind erhältlich, indem zunächst ein Kammcopolymer (A) bereitgestellt wird, dessen Polymerrückgrat (im folgenden auch als "Rückgrat", "Polymerhauptkette" oder "Hauptkette" bezeichnet) zu wenigstens 20 Gewichtsprozent, bezogen auf das Gesamtgewicht des Polymerrückgrates, bevorzugt zu wenigstens 50 Gewichtsprozent, besonders bevorzugt zu 80 bis 100 Gewichtsprozent aus Acrylat-Monomereinheiten besteht. Erfindungsgemäß wird hierfür das wenigstens eine (Meth-)-Acrylatmonomer in Gegenwart des wenigstens einen Makromers, ausgewählt aus der Gruppe bestehend aus polymerisierbaren Ethylen-Butylen-, Ethylen-Propylen-, Ethylen-Butylen-Propylen- und Isobutylen-Makromeren, polymerisiert.

Das Gemisch enthaltend Acrylsäure, Butylacrylat, 2-Ethylhexylacrylat und Isobornylacrylat kann weiter wenigstens ein Monomer ausgewählt aus der Gruppe bestehend aus Methacrylsäure, Methylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, bevorzugt wenigstens ein Monomer der Gruppe bestehend aus Methacrylsäure, Methylacrylat, Stearylacrylat, Isostearylacrylat, Amylacrylat, Isooctylacrylat und Decylacrylat umfassen.

In einer bevorzugten Ausführungsform der Erfindung findet die Polymerisation des Gemischs enthaltend Acrylsäure, Butylacrylat, 2-Ethylhexylacrylat und Isobornylacrylat (im folgenden "Monomerengemisch") in Gegenwart wenigstens eines weiteren copolymerisierbaren Monomers statt. Dieses weitere, copolymerisierbare Monomer ist bevorzugt ausgewählt aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

Ebenfalls bevorzugt wird die Polymerisation des Monomerengemisches in Anwesenheit eines weiteren, zweiten Makromers durchgeführt. Dieses zusätzliche, zweite Makromer ist ein nicht-polyolefinisches Makromer, bevorzugt ausgewählt aus Polymethacrylaten, Polystyrolen, Polydimethylsiloxanen, Polyethylenoxiden und Polypropylenoxiden.

Die erfindungsgemäße Polymerzusammensetzung umfasst neben dem Kammcopolymer (A) wenigstens eine in der Kohlenwasserstoffphase Kw des Kammcopolymers lösliche Kohlenwasserstoffverbindung (B). Genau wie das wenigstens eine (Meth-)Acrylatmonomer eine Mischung mehrerer (Meth-)Acrylatmonomere sein kann, kann auch die wenigstens eine Kohlenwasserstoffverbindung (B) ein Gemisch verschiedener Kohlenwasserstoffverbindungen darstellen, bevorzugt ein Gemisch zweier Kohlenwasserstoffverbindungen (B-1) und (B-2). Die Kohlenwasserstoffverbindungen (B), (B-1) und (B-2) sind bevorzugt Kohlenwasserstoffharze mit einem zahlenmittleren Molekulargewicht Mn von 1.000 g/mol oder weniger, gemessen nach der GPC Methode. In einer besonders bevorzugten Ausführungsform umfasst die Kohlenwasserstoffverbindung (B) ein Festharz (B-1) und/oder ein Weichharz (B-2), bevorzugter sowohl ein Festharz (B-1) als auch ein Weichharz (B-2).

In einer weiteren Ausführungsform der Erfindung enthält die Polymerzusammensetzung zusätzlich eine Kohlenwasserstoffverbindung (C), deren zahlenmittleres Molekulargewicht (Mn), gemessen nach der GPC Methode, mehr als 1.000 g/mol beträgt. In einer weiteren Ausführungsform enthält die Polymerzusammensetzung wenigstens ein Additiv, ausgewählt aus der Gruppe bestehend aus Weichmachern, Ölen und in der Acrylatphase des Kammcopolymers (A) löslichen Harzen, bevorzugt Kolophoniumestern und/oder Terpenphenolharzen.

In einem zweiten Aspekt betrifft die vorliegende Erfindung Verfahren zur Herstellung einer mehrphasigen Polymerzusammensetzung gemäß einem der vorhergehenden Ansprüche, umfassend die Schritte
- Polymerisieren eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer Acrylat-Hauptkette und Kohlenwasserstoff-Seitenketten;
- Mischen des so erhaltenen Kammcopolymers (A) mit wenigstens einer Kohlenwasserstoffverbindung (B), die mit den Kohlenwasserstoff-Seitenketten des Kammcopolymers (A) kompatibel ist;
- sowie, optional, das Vernetzen reaktiver, funktioneller Gruppen.

Ferner betrifft die vorliegende Erfindung Haftklebmassen, umfassend eine mehrphasige Polymerzusammensetzung wie hierin beschrieben, sowie die Verwendung der Haftklebmasse zur Verklebung von Gegenständen, insbesondere von Gegenständen mit Oberflächen, die eine niedrige Oberflächenenergie aufweisen (LSE-Materialien).

Nachfolgend werden die Komponenten der erfindungsgemäßen Polymerzusammensetzung und der Haftklebmasse, umfassend die Polymerzusammensetzung näher beschrieben.

### Kammcopolymer (A)

Als Kammcopolymere (engl. comb-type graftcopolymer) werden Polymere bezeichnet, für deren Aufbau charakteristisch ist, dass sie an ihrer Hauptkette (Polymerrückgrat) Seitenketten tragen, die aufgrund ihrer Länge bereits für sich als Polymer angesehen werden könnten.

Wie hierin verwendet, soll das Kammcopolymer (A) für ein Copolymer stehen, das insbesondere durch freie radikalische Polymerisation eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren erhältlich ist.

### (Meth-)Acrylatmonomer

Das Kammcopolymer (A) der erfindungsgemäßen Polymerzusammensetzung ist durch Polymerisation aus dem Gemisch enthaltend Acrylsäure, Butylacrylat, 2-Ethylhexylacrylat und Isobornylacrylat in Gegenwart des wenigstens einen Makromers herstellbar. An der Polymerisation können ferner weitere copolymerisierbare Monomere teilnehmen. Das Gemisch enthaltend Acrylsäure, Butylacrylat, 2-Ethylhexylacrylat und Isobornylacrylat macht dabei bevorzugt 50-99, besonders bevorzugt 75-95, ganz besonders bevorzugt 85-90 Gewichtsprozent aller an der Polymerisation teilnehmenden Bestandteile, d.h. sämtlicher copolymerisierbarer Monomere, Makromere, einschließlich dem wenigstens einen (Meth-)Acrylatmonommer, aus. Das Makromer liegt bevorzugt in einem Anteil von 1-50, bevorzugter 5-25, besonders bevorzugt 10-15 Gewichtsprozent, bezogen auf alle an der Polymerisation teilnehmenden Bestandteile, d.h.
bezogen auf sämtliche copolymerisierbare Monomere und Makromere, einschließlich dem wenigstens einen (Meth-)Acrylatmonommer, vor.

Das Gemisch enthaltend Acrylsäure, Butylacrylat, 2-Ethylhexylacrylat und Isobornylacrylat kann neben den genannten Monomeren weiter auch Methacrylsäure, Methylacrylat, Stearylacrylat, Isostearylacrylat, Amylacrylat, Isooctylacrylat, Decylacrylat, Hydroxyethylacrylat, Hydroxyethylmethacrylat und 4-Hydroxybutylacrylat, besonders bevorzugt Methacrylsäure, Methylacrylat, Stearylacrylat, Isostearylacrylat, Amylacrylat, Isooctylacrylat und Decylacrylat enthalten.

In einer bevorzugten Ausführungsform der Erfindung findet die Polymerisation des Gemischs enthaltend Acrylsäure, Butylacrylat, 2-Ethylhexylacrylat und Isobornylacrylat (im folgenden "Monomerengemisch") in Gegenwart wenigstens eines weiteren copolymerisierbaren Monomers statt. Dieses weitere, copolymerisierbare Monomer ist bevorzugt ausgewählt aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

Das Gemisch enthaltend Acrylsäure, Butylacrylat, 2-Ethylhexylacrylat und Isobornylacrylat, das - wie hierin beschrieben - durch Polymerisation in Gegenwart des wenigstens einen Makromers zu dem Kammcopolymer (A) polymerisierbar ist, wird dabei bevorzugt so ausgewählt, dass die kontinuierliche Acrylatphase der erfindungsgemäßen, mehrphasigen Polymerzusammensetzung eine statische Glasübergangstemperatur, Tg(Ac) von weniger als -10 °C, bevorzugt in einem Bereich von -60 °C bis -20 °C, besonders bevorzugt in einem Bereich von -50 bis -30 °C aufweist. Hierzu kommen bevorzugt wenigstens ein, bevorzugter wenigstens zwei sogenannte niedrig-Tg-(Meth-)Acrylatmonomere zum Einsatz, deren Homopolymere eine statische Glasübergangstemperatur (Tg), gemessen nach der DSC Methode (Messmethode A2), von 40 °C oder weniger, bevorzugt 25 °C oder weniger aufweisen.

Entsprechende "niedrig-Tg-Monomere" sind in J. Brandrup, E.H. Immergut, E.A. Grulke, Polymer Handbook, 4th Edition, 1998, beschrieben. In einer bevorzugten Ausführungsform kann das Monomerengemisch neben Butylacrylat und 2-Ethylhexylacrylat als "niedrig-Tg-Monomere" auch Amylacrylat, Isooctylacrylat und Decylacrylat umfassen.

Dieses Gemisch von niedrig-Tg-Monomeren liegt bevorzugt in einem Anteil von 43-97 Gewichtsprozent vor, bezogen auf alle an der Polymerisation teilnehmenden Bestandteile. Die Polymerisation des Monomerengemischs kann - neben Acrylsäure - in Gegenwart von Methacrylsäure, Itaconsäure, Itaconsäureanhydrid, Maleinsäure, Maleinsäureanhydrid und/oder einem weiteren, sogenannten hoch-Tg-Monomeren stattfinden, dessen Homopolymere eine statische Glasübergangstemperatur (Tg), gemessen nach der DSC Methode (Messmethode A2), von mehr als 40 °C, bevorzugt mehr als 80 °C aufweisen. Entsprechende "hoch-Tg-Monomere" sind in J. Brandrup, E.H. Immergut, E.A. Grulke, Polymer Handbook, 4th Edition, 1998, beschrieben. Acrylsäure, Methacrylsäure, Itaconsäure, Itaconsäureanhydrid, Maleinsäure, Maleinsäureanhydrid und/oder das(die) andere(n), sogenannte(n) hoch-Tg-Monomer(e) liegen bevorzugt in einem Anteil von 2-7, besonders bevorzugt in einem Anteil von 2-6, ganz besonders bevorzugt in einem Anteil von 3-5 Gewichtsprozent, bezogen auf das Gesamtgewicht aller an der Polymerisation teilnehmenden Bestandteile, d.h. aller Monomere und Makromere vor.

In einer Ausführungsform findet die Polymerisation in Gegenwart von bis zu 20 Gewichtsprozent, bevorzugt bis zu 15 Gewichtsprozent (bezogen auf das Gesamtgewicht aller an der Polymerisation teilnehmenden Bestandteile) wenigstens von Isobornylacrylat statt; weitere copolymerisierbare Monomere sind ausgewählt aus der Gruppe bestehend aus Stearylacrylat, Isostearylacrylat, Hydroxyethylacrylat, Hydroxyethylmethacrylat, 4-Hydroxybutylacrylat, Vinylacetat, Vinylbutyrat, Vinylpropionat, Vinylisobutyrat, Vinylvalerat, Vinylversatat, N-Vinylpyrollidon und N-Vinylcaprolactam, bevorzugt ausgewählt aus Isobornylacrylat, Stearylacrylat, Isostearylacrylat, Vinylacetat, Vinylbutyrat, Vinylpropionat, Vinylisobutyrat, Vinylvalerat, Vinylversatat, N-Vinylpyrollidon und N-Vinylcaprolactam.

In einer besonders bevorzugten Ausführungsform nimmt an der Polymerisation kein Hydroxyalkyl(meth)acrylat Teil. Es wird vermutet, dass die Polymerisation des wenigstens einen (Meth-)Acrylatmonomers in Abwesenheit von Hydroxyalkyl(meth)acrylaten die Bereitstellung besonders vorteilhafter Kammcopolymere (A) erlaubt.

Beispielhafte, bevorzugte Gemische bestehen aus 3-7 Gewichtsprozent Acrylsäure, 45-65 Gewichtsprozent Butylacrylat, 20-27 Gewichtsprozent 2-Ethylhexylacrylat und bis zu 15 Gewichtsprozent Isobornylacrylat, wobei sich die Angaben in Gewichtsprozent auf das Gesamtgewicht des Comonomerengemisches und des wenigstens einen Makromers, d.h. auf alle an der Polymerisation teilnehmenden Bestandteile beziehen.

### Makromer

Das wenigstens eine (Meth-)Acrlylatmonomer wird in Gegenwart wenigstens eines Makromers unter Ausbildung eines Kammcopolymers (A) polymerisiert. Makromere sind relativ niedermolekulare Polymere mit einer reaktiven, copolymerisierbaren funktionellen Gruppe an einem oder mehreren Enden des Polymers. Das wenigstens eine Makromer ist ausgewählt aus der Gruppe bestehend aus polymerisierbaren Ethylen-Butylen-, Ethylen-Propylen-, Ethylen-Butylen-Propylen- und Isobutylen-Makromeren. Die Makromerhauptketten dieser Ethylen-Butylen-, Ethylen-Propylen-, Ethylen-Butylen-Propylen- und Isobutylen-Makromere sind bevorzugt vollständig hydriert. Sie sind erhältlich mittels anionischer Polymerisation der entsprechenden Monomere. Ein bekanntes Verfahren umfasst beispielsweise eine anionische Polymerisation zur Herstellung Hydroxyl-terminierter, konjugierter Dienpolymere aus Monomeren wie 1,3-Butadien und/oder Isopren. Geeignete kautschukartige Monoole wie das Kraton^{®} L 1203 werden von der Firma Kraton Polymers Company angeboten. In einem anschließenden Schritt kann die terminale Hydroxyfunktion zu einer Acryloyl- oder Methacrylolfunktionalität umgesetzt werden.

Das Makromer weist erfindungsgemäß ein Molekulargewicht von 1.000 bis 500.000 g/mol, bevorzugt 2.000 bis etwa 30.000 g/mol, besonders bevorzugt 2.000 bis 10.000 g/mol auf (gemessen mittels Gelpermeationschromatographie (GPC), Polysytrol als Standard, Messmethode A1) auf. In einer bevorzugten Ausführungsform der Erfindung hat das Makromer eine Glasübergangstemperatur gemessen nach der DSC-Methode, von -30°C oder weniger, bevorzugt von -70°C bis -50°C. Entsprechende Makromere sind kommerziell erhältlich, z.B. von der Firma Kuraray Co., Ltd. Ein bevorzugtes Makromer ist L-1253 der Firma Kuraray Co., Ltd. Makromere, wie hierin verwendet, sind relativ niedermolekulare Polymere mit einer funktionellen, copolymerisierbaren reaktiven Gruppe, insbesondere einer Acrylat-oder Methacrylat-funktionellen Gruppe an einem oder mehreren Enden des Polymers

### Kammcopolymer (A)

Durch Polymerisation, vorzugsweise durch freie radikalische Polymerisation des wenigstens einen (Meth-)Acrylatmonomers oder eines Monomerengemisches umfassend das (Meth-)Acrylatmonomer in Gegenwart des wenigstens einen Makromers ist das Kammcopolymer (A) erhältlich. Bei dem Kammcopolymer (A) handelt es sich um ein kammartiges Copolymer, das mitunter auch als"Pfropfcopolymer" bezeichnet wird. Die Bezeichnung"Pfropfcopolymer" ist hierbei jedoch insofern missverständlich, weil sich das Kammcopolymer vorliegend durch Polymerisation der Comonomere des Comonomerengemisches in Gegenwart der Makromermoleküle bilden lässt. Statt durch Pfropfcopolymerisation, bei der ein bereits bestehendes Polymerrückgrat als Anknüpfungspunkt für Ketten weiterer Monomere dient, werden die Seitenketten des Kammcopolymers (A), wie hierein verwendet, also bevorzugt während der Polymerisation der Comonomere mit den copolymerisierbaren reaktiven Gruppen des Makromers, bevorzugt mit den Acrylat- oder Methacrylat-funktionellen Gruppen des Makromers, über die Makromerketten eingeführt. Die copolymerisierbaren reaktiven Gruppen des Makromers werden insofern bereits während der Polymerisation des Comonomerengemisches in das Polyacrylatrückgrat (Hauptkette) eingebaut. Die Ethylen-Butylen-, Ethylen-Propylen-, Ethylen-Butylen-Propylen- und/oder Isobutylen-Ketten des Makromers bilden die Seitenketten des Kammcopolymers (A) (hierin auch als Kohlenwasserstoff-Seitenketten des Kammcopolymers (A) bezeichnet). Aufgrund seiner Struktur wird das Kammcopolymer (A) auch als "Flaschenbürstenpolymer" (engl.: bottle brush polymer) bezeichnet. In der erfindungsgemäßen Polymerzusammensetzung führt diese Struktur und der lipophile Charakter der Kohlenwasserstoffseitenketten zur Ausbildung einer kontinuierlichen Acrylatphase und einer diskontinuierlichen Kohlenwasserstoffphase Kw des Kammcopolymers (A). Die Kohlenwasserstoffphase Kw liegt bevorzugt mikrophasensepariert vor. Es wird vermutet, dass das phasenseparierte, bevorzugt mikrophasenseparierte Kammcopolymer (A) aufgrund der Ausbildung der kontinuierlichen Acrylatphase und der diskontinuierlichen Kohlenwasserstoffphase Kw unterschiedliche Materialeigenschaften, nämlich einen kautschukartigen, d.h. vorliegend einen hydrophoben, thermoplastischen Charakter der Seitenketten und die inhärent haftklebrigen Eigenschaften des Polyacrylatrückgrates miteinander vereint.

Der Anteil des wenigstens einen Makromers beträgt 1 bis 50 Gewichtsprozent, bevorzugt 5 bis 25 Gewichtsprozent, und besonders bevorzugt 10 bis 15 Gewichtsprozent bezogen auf das Gesamtgewicht aller an der Polymerisation teilnehmenden Bestandteile. Mit anderen Worten machen die Makromereinheiten innerhalb des Kammcopolymers (A) 5 bis 25 Gewichtsprozent, und bevorzugt 10 bis 15 Gewichtsprozent, bezogen auf das Gesamtgewicht des Kammcopolymers (A) aus.

In einer weiteren bevorzugten Ausführungsform wird die Polymerisation in Gegenwart wenigstens eines weiteren, nicht-polyolefinischen Makromers durchgeführt. Dieses zusätzliche, nicht-polyolefinische Makromer ist bevorzugt ausgewählt aus der Gruppe der Polymethylacrylate, der Polystyrole, der Polydimethylsiloxane, der Polyethylenoxide und der Polypropylenoxide. Auch bei diesen weiteren nicht-polyolefinischen Makromeren handelt es sich um copolymerisierbare Makromere. Mit anderen Worten weisen auch diese nicht-polyolefinischen Makromere bevorzugt eine funktionelle Acrylat- oder Methacrylatgruppe am Ende der Polymerkette des Makromers auf. In einer Ausführungsform der Erfindung beträgt der Anteil des wenigstens einen weiteren, nicht-polyolefinischen Makromers bis zu 20, bevorzugt bis zu 10, besonders bevorzugt bis zu 5 Gewichtsprozent, bezogen auf das Gesamtgewicht aller an der Polymerisation teilnehmenden Bestandteile.

### Kohlenwasserstoffverbindung (B)

Die mehrphasige Polymerzusammensetzung umfasst wenigstens eine Kohlenwasserstoffverbindung (B), bevorzugt wenigstens zwei Kohlenwasserstoffverbindungen (B-1) und (B-2), die in der Kohlenwasserstoffphase des Kammcopolymers (A) löslich sind. Der Ausdruck "löslich" bedeutet in diesem Zusammenhang, dass die Kohlenwasserstoffverbindungen (B-1) und (B-2) mit den Kohlenwasserstoffseitenketten des Kammcopolymers (A) kompatibel sind, sodass sich innerhalb der Polymerzusammensetzung eine gemeinsame Kohlenwasserstoffphase Kw1 ausbildet, die aus den Kohlenwasserstoffseitenketten des Kammcopolymers (A) und der Kohlenwasserstoffverbindung (B), bevorzugt aus den Kohlenwasserstoffseitenketten des Kammcopolymers (A) und den Kohlenwasserstoffverbindungen (B-1) und (B-2) besteht. Das Vorliegen dieser gemeinsamen Kohlenwasserstoffphase kann mittels DSC Methode nachgewiesen werden: Sofern sich die Zusammensetzung bestehend aus Kammcopolymer (A) und Kohlenwasserstoffverbindung (B) bzw. den Kohlenwasserstoffverbindungen (B-1) und (B-2) bei der DSC Messung lediglich hinsichtlich der Beträge der statischen Glasübergangstemperaturen von dem Kammcopolymer (A) vor der Zugabe der Verbindung (B) bzw. der Verbindungen (B-1) und (B-2) unterscheidet, liegt keine zusätzliche Phase vor, die im Sinne einer zusätzlichen statischen Glasübergangstemperatur hätte ermittelt werden können. Die Kohlenwasserstoffphase der Polymerzusammensetzung wird vielmehr über ihre statische Glasübergangstemperatur, Tg(Kw1), charakterisiert. Dies bedeutet, dass die sich aus den Seitenketten des Kammcopolymers (A) und der Verbindung (B) ergebende Kohlenwasserstoffphase Kw1 nur eine, von der Tg des reinen Kammcopolymers (A) verschiedene, Glasübergangstemperatur Tg(Kw1) aufweist. Wäre B nicht in der Kohlenwasserstoffphase Kw des Kammcopolymers löslich, wären zwei Kohlenwasserstoffphasen-Tg - nämlich eine für die Kohlenwasserstoffphase des (reinen) Kammcopolymers A und eine für die Komponente (B) - feststellbar. Entsprechend ist auch die Acrylatphase innerhalb der Polymerzusammensetzung, zu der das Acrylatrückgrat des Kammcopolymers (A) beiträgt, mittels DSC hinsichtlich ihrer Glasübergangstemperatur (Tg (Ac)) bestimmbar.

Bei der Kohlenwasserstoffverbindung (B) handelt es sich bevorzugt um ein Kohlenwasserstoffharz mit einem zahlenmittleren Molekulargewicht Mn (bestimmt mittels GPC, Methode A1) von 1.000 g/mol oder weniger, bevorzugt um ein Festharz (B-1) und/oder ein Weichharz (B-2). Festharze im Sinne der vorliegenden Erfindung sind Kohlenwasserstoffharze mit einem Erweichungspunkt von mindestens 70°C, bevorzugt 70 bis 150 °C, besonders bevorzugt 80 bis 120 °C. Weichharze, wie hierin verwendet sind Kohlenwasserstoffharze mit einem Erweichungspunkt von höchstens 20°C. Die jeweiligen Erweichungspunkte der Kohlenwasserstoffharze (B-1) und (B-2) sind Ring- und Ball-Erweichungspunkte (gemessen nach ASTM E28-99).

Die Kohlenwasserstoffverbindung (B) ist bevorzugt eine Mischung zweier Kohlenwasserstoffharze (B-1) und (B-2). Die Kohlenwasserstoffharze (B-1) und (B-2) liegen bevorzugt in einem Gewichtsverhältnis (B-1) : (B-2) von 41:59 bis 70:30 vor. In einer besonders bevorzugten Ausführungsform der Erfindung liegt der Anteil an Kohlenwasserstoffharz (B-1) mit einem Erweichungspunkt von mindestens 70°C zwischen 41 und 70 Gewichtsprozent, besonders bevorzugt zwischen 50 und 60 Gewichtsprozent bezogen auf die Gesamtmenge aller Kohlenwasserstoffharze der mehrphasigen Polymerzusammensetzung.

Geeignete Festharze sind Erdöl-basierte synthetische Kohlenwasserstoffe. Beispiele umfassen Harze basierend auf aliphatischen Olefinen. Entsprechende Harze sind erhältlich von Cray Valley unter der Bezeichnung Wingtack^{®} 95, von Exxon unter dem Handelsnamen Escorez^{®}, von Arakawa Chemical unter dem Handelsnamen Arkon^{®} (P-Reihe), von Hercules Speciality Chemicals unter dem Handelsnamen Regalrez^{®} (1030-, 2000-, 5000-Serie) und unter der Bezeichnung Regalite^{®} (R-Reihe), und von Yasuhara Yushi Kogyo Company unter dem Handelsnamen Clearon^{®}.

Geeignete Weichharze sind das C5-Harz Wingtack^{®} 10 von Cray Valley, das Polyterpenharz Dercolyte^{®} LTG sowie die vollhydrierten Kohlenwasserstoffharze Regalite^{®} 1010 und Piccotac^{®} 1020.

In einer weiteren Ausführungsform der Erfindung beträgt der Anteil der wenigstens einen in der Kohlenwasserstoffphase Kw des Kammcopolymers (A) löslichen Kohlenwasserstoffverbindung (B), bevorzugt der Anteil der Verbindungen (B-1) und (B-2) an der Kohlenwasserstoffphase Kw1 der Polymerzusammensetzung, deren Tg, Tg(Kw1), mittels DSC bestimmbar ist, mindestens 80 Gewichtsprozent bezogen auf den Gewichtsanteil der Kohlenwasserstoffphase an der Polymerzusammensetzung, d.h. bezogen auf die Menge an Kohlenwasserstoffseitenketten des Kammcopolymers (A) und des (der) Kohlenwasserstoffharze(s) (B) bzw. (B-1) und (B-2).

Es hat sich überraschend herausgestellt, dass sich die Kohlenwasserstoffharze (B-1) und (B-2) zur Bereitstellung besonders vorteilhafter Polymerzusammensetzungen eignen, wenn die Kohlenwasserstoffverbindungen (B-1) und (B-2) in einem Anteil von 36 bis 70 Gewichtsteilen, bevorzugt 40 bis 55 Gewichtsteilen, bezogen auf 100 Gewichtsteile der Polymerzusammensetzung, vorliegen. Im Falle hoher Anteile der Kohlenwasserstoffverbindung (B-2) an der Polymerzusammensetzung kann es zur Ausbildung einer zusätzlichen Kohlenwasserstoffphase innerhalb der Acrylatphase kommen. Eine mögliche Erklärung hierfür ist, dass das Weichharz (B-2) in einer Menge zugegeben wird, die die Löslichkeitsgrenze der Kohlenwasserstoffverbindung (B-2) innerhalb der Kohlenwasserstoffphase des Kammcopolymers (A) übersteigt. Diese zusätzliche Kohlenwasserstoffphase kann beispielsweise mittels dynamisch mechanischer Analyse (DMA) (Messmethode A3) nachgewiesen werden.

### Additive und Klebharze

Neben dem Kammcopolymer (A) und den Kohlenwasserstoffverbindungen (B-1) und (B-2) kann die Polymerzusammensetzung wenigstens ein Additiv und/oder Klebharz enthalten.

### Additive wie hierin verwendet umfassen

Weichmacher, Öle und in der Acrylatphase des Kammcopolymers (A) lösliche Harze, bevorzugt Kolophoniumester und/oder Terpenphenolharze. Bevorzugte Kolophoniumester sind hydrierte Kolophoniumester. Bevorzugte Terpenphenolharze sind alterungsbeständige Terpenphenolharze.

Ebenfalls möglich ist die Zugabe eines oder mehrerer Klebharze. Der Einsatz geeigneter Klebharze erlaubt die Feinabstimmung der statischen Glasübergangstemperaturen der Acrylatphase, Tg(Ac), und der Kohlenwasserstoffphase, Tg(Kw1), der Polymerzusammensetzung. Die Additive und Klebharze liegen, sofern vorhanden, bevorzugt in einer Menge von bis zu 20 Gewichtsteilen, bevorzugt von bis zu 5 Gewichtsteilen, bezogen auf 100 Gewichtsteile der Polymerzusammensetzung vor.

In einer weiteren, bevorzugten Ausführungsform enthält die Polymerzusammensetzung eine zusätzliche Kohlenwasserstoffverbindung (C), deren zahlenmittleres Molekulargewicht (Mn) mehr als 1.000 g/mol beträgt. Bevorzugt handelt es sich bei dieser zusätzlichen Kohlenwasserstoffverbindung (C) um ein weiteres Weichharz. Insbesondere enthält die Polymerzusammensetzung mindestens eine Kohlenwasserstoffverbindung (B), besonders bevorzugt eine Kohlenwasserstoffverbindung (B-1) und eine Kohlenwasserstoffverbindung (B-2) mit einem zahlenmittleren Molekulargewicht Mn (bestimmt mittels GPC, Methode A1) von 1.000 g/mol oder weniger und eine zusätzliche Kohlenwasserstoffverbindung (C), deren zahlenmittleres Molekulargewicht (Mn) mehr als 1.000 g/mol beträgt. In einer besonderen Ausführungsform der Erfindung bildet die Kohlenwasserstoffverbindung (C) eine diskontinuierliche Phase innerhalb der Acrylatphase der Polymerzusammensetzung. Mit anderen Worten liegen in dieser besonderen Ausführungsform zwei unterschiedliche diskontinuierliche Phasen innerhalb der kontinuierlichen Phase der Polymerzusammensetzung vor. Gemäß dieser Ausführungsform liegt die statische Glasübergangstemperatur dieser zusätzlichen Phase innerhalb der Polymerzusammensetzung, Tg (C), zwischen den Glasübergangstemperaturen Tg(Kw1) und Tg(Ac) der Polymerzusammensetzung.

Weiterhin können Alterungsschutzmittel, Lichtschutzmittel und Ozonschutzmittel als Additive verwendet werden. Als Alterungsschutzmittel können Irganox^{®} Typen der Fa. BASF bzw. Hostanox^{®} der Firma Clariant, bevorzugt primäre, z.B. 4-Methoxyphenol oder Irganox^{®} 1076, und sekundäre Alterungsschutzmittel, z.B. Irgafos^{®} TNPP oder Irgafos^{®} 168 der Fa. BASF, auch in Kombination miteinander eingesetzt werden. Weitere geeignete Alterungsschutzmittel sind Phenothiazin (C-Radikalfänger) sowie Hydrochinonmethylether in Gegenwart von Sauerstoff sowie Sauerstoff selbst. Als Lichtschutzmittel können UV-Absorber (Cyasorb^{®}-serie) oder sterisch gehinderte Amine (Tinuvin^{®}-Serie) verwendet werden.

In einer bevorzugten Ausführungsform der Erfindung ist das Kammcopolymer (A) oder die mehrphasige Polymerzusammensetzung vernetzt. Als mögliche Vernetzer, mit denen beispielsweise Hydroxy-, Säureanhydrid- oder Caprolactam- funktionelle Gruppen innerhalb der Acrylatphase des Kammcopolymers zur Kohäsionssteigerung der Polymerzusammensetzung ausgenutzt werden können, kommen insbesondere koordinativ oder kovalent bindende chemische Vernetzungsmittel in Betracht. Beispielhafte koordinative Vernetzer sind Metall-Chelate wie z.B. Aluminium- und Titan-Chelat. Beispielhafte kovalente Vernetzer, die insbesondere zur Steigerung der Irganox^{®} 1076, und sekundäre Alterungsschutzmittel, z.B. Irgafos^{®} TNPP oder Irgafos^{®} 168 der Fa. BASF, auch in Kombination miteinander eingesetzt werden. Weitere geeignete Alterungsschutzmittel sind Phenothiazin (C-Radikalfänger) sowie Hydrochinonmethylether in Gegenwart von Sauerstoff sowie Sauerstoff selbst. Als Lichtschutzmittel können UV-Absorber (Cyasorb^{®}-serie) oder sterisch gehinderte Amine (Tinuvin^{®}-Serie) verwendet werden.

In einer bevorzugten Ausführungsform der Erfindung ist das Kammcopolymer (A) oder die mehrphasige Polymerzusammensetzung vernetzt. Als mögliche Vernetzer, mit denen beispielsweise Hydroxy-, Säureanhydrid- oder Caprolactam- funktionelle Gruppen innerhalb der Acrylatphase des Kammcopolymers zur Kohäsionssteigerung der Polymerzusammensetzung ausgenutzt werden können, kommen insbesondere koordinativ oder kovalent bindende chemische Vernetzungsmittel in Betracht. Beispielhafte koordinative Vernetzer sind Metall-Chelate wie z.B. Aluminium- und Titan-Chelat. Beispielhafte kovalente Vernetzer, die insbesondere zur Steigerung der Hochtemperaturscherfestigkeit verwendet werden können, sind Isocyanate, Epoxide, Aziridine, Carbodiimide und Oxazoline. Vernetzer werden im Sinne der vorliegenden Erfindung bevorzugt in einer Menge von etwa 0.02 bis etwa 2 Gewichtsprozent, bezogen auf das Gesamtgewicht des Kammcopolymers (A), eingesetzt.

### Verfahren zur Herstellung der mehrphasigen Polymerzusammensetzungen

Die erfindungsgemäßen Polymerzusammensetzungen können hergestellt werden, indem zunächst das hierin beschriebene Gemisch enthaltend Acrylsäure, Butylacrylat, 2-Ethylhexylacrylat und Isobornylacrylat in Gegenwart des wenigstens einen Makromers, ausgewählt aus der Gruppe bestehend aus polymerisierbaren Ethylen-Butylen-, Ethylen-Propylen-, Ethylen-Butylen-Propylen- und Isobutylen-Makromeren unter Ausbildung des Kammcopolymers (A) polymerisiert wird. Das Kammcopolymer (A) kann hierbei durch herkömmliche dem Fachmann geläufige Polymerisationstechniken hergestellt werden. Diese Verfahren umfassen Lösungspolymerisations-, Suspensionspolymerisations-, Emulsionspolymerisations- und Substanzpolymerisationsverfahren. Bevorzugt werden die Kammcopolymere (A) in Lösung mittels freier radikalischer Polymerisation hergestellt. Bevorzugte Lösungsmittel und

Polymerzusammensetzung haben die Domänen der Kohlenwasserstoffphase eine Größe, die unterhalb der Wellenlänge des sichtbaren Lichts (390-780 nm) liegt.

### Haftklebmasse

Die vorliegende Erfindung betrifft ferner Haftklebmassen, umfassend die erfindungsgemäße Polymerzusammensetzung. Überraschend wurde gefunden, dass sich die Haftklebmassen besonders zur Verklebung von Substraten mit unpolaren Oberflächen eignen. Die Haftklebmassen der vorliegenden Erfindung sind dabei dennoch zur Verklebung polarer Oberflächen geeignet. Unter unpolaren Oberflächen werden Substrate mit einer niedrigen Oberflächenenergie bzw. niedrigen Oberflächenspannung verstanden, insbesondere mit einer Oberflächenspannung von kleiner als 45 mN/m, bevorzugt von kleiner als 40 mN/m und besonders bevorzugt von kleiner 35 mN/m. Zur Bestimmung der Oberflächenspannung wird der Kontaktwinkel nach DIN EN 828 gemessen.

Die erfindungsgemäße Haftklebmasse wird bevorzugt in Filmform, d.h. als Klebeband bereitgestellt. Hierzu kann die mehrphasige Polymerzusammensetzung entweder als solche oder nach Zusatz von Klebharzen mittels geläufiger Beschichtungsverfahren aus Lösung zu einer Haftklebemasseschicht auf einem Trägermaterial (Folie, Schaum, syntaktischer Schaum, Gewebe, Papier) ausgeformt werden, wobei die Haftklebmasseschicht ein Flächengewicht von 40 bis 100 g/m2 aufweist.

Erfindungsgemäße Klebebänder können gestaltet sein als
- einschichtige, beidseitig selbstklebende Klebebänder - sogenannte "Transfertapes" - aus einer einzigen Schicht der erfindungsgemäßen Haftklebmasse bzw. der erfindungsgemäßen mehrphasigen Polymerzusammensetzung;
- einseitig selbstklebend ausgerüstete Klebebänder - nachfolgend "einseitige Selbstklebebänder" - bei denen die erfindungsgemäße Haftklebmasse bzw. die erfindungsgemäße mehrphasige Polymerzusammensetzung in einem mehrschichtigen Produkt bereitgestellt wird, zum Beispiel in Form von Zweischichtsystemen bestehend aus einer Schicht der erfindungsgemäßen Haftklebmasse bzw. der erfindungsgemäßen mehrphasigen Polymerzusammensetzung und einer geschäumten oder ungeschäumten Trägerschicht,
- mehrschichtige, beidseitig selbstklebend ausgerüstete Klebebänder mit zwei Haftklebmasseschichten - nachfolgend "doppelseitige Selbstklebebänder" - von denen wenigstens eine die erfindungsgemäße mehrphasige Polymerzusammensetzung umfasst;
- doppelseitige Klebebänder mit einer hitzeaktivierbaren Klebeschicht auf einer der Klebebandseiten und einer Schicht der erfindungsgemäßen Haftklebmasse bzw. der erfindungsgemäßen mehrphasigen Polymerzusammensetzung auf der anderen Klebebandseite. Hierzu können die beiden Schichten auf unterschiedlichen Seiten wenigstens eines geschäumten oder ungeschäumten Trägers oder auf unterschiedlichen Seiten eines mehrschichtigen Systems aufgetragen werden.

Dabei können die doppelseitigen Produkte, egal ob zur Verklebung oder zur Dichtung gedacht, einen symmetrischen oder einen asymmetrischen Produktaufbau aufweisen.

Das Klebeband ist für Transport, Lagerung oder Stanzprozesse vorzugsweise mindestens einseitig mit einem Liner versehen, also zum Beispiel mit einer silikonbeschichteten Folie oder einem Silikonpapier.

Im Folgenden wird die Erfindung anhand konkreter Beispiele näher erläutert.

### Experimenteller Teil

Die folgenden beispielhaften Experimente sollen die Erfindung näher erläutern, ohne dass durch die Wahl der angegebenen Beispiele die Erfindung unnötig eingeschränkt werden soll.

### Messmethoden (allgemein):

### Gelpermeationschromatographie GPC (Messmethode A1):

Die Angaben der zahlenmittleren und gewichtsmittleren Molekulargewichte Mₙ und M_{w} sowie der Polydispersität PD in dieser Schrift beziehen sich auf die Bestimmung per Gelpermeationschromatographie. Die Bestimmung erfolgt an 100 µL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, ID 8,0 mm · 50 mm verwendet. Zur Auftrennung werden die Säulen des Typs PSS-SDV, 5 µm, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung) im Falle der Kammpolymere und PS-Standards (Polystyrolkalibrierung) im Falle der Kohlenwasserstoffharze.

### Statische Glasübergangstemperatur Tg (Messmethode A2)

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

### Dynamisch Mechanische Analyse (DMA) (Messmethode A3)

Der Test wird in einem schergeschwindigkeitskontrollierten Rheometer der Firma Ares unter Torsionsbelastung gefahren, wobei eine Platte-Platte-Geometrie mit einem Plattendurchmesser von 25 mm verwendet wird. Für die Temperatursweep-Messung beträgt die Messfrequenz 10 rad/s, der Temperaturbereich -40 °C bis 130 °C, die Aufheizrate 2,5°C/min und die Deformation 1 %.

### Feststoffgehalt (Messmethode A4):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### Messmethoden (insbesondere Haftklebemassen):

### 180° Klebkrafttest (Messmethode H1):

Die Bestimmung der Klebkraft Stahl erfolgt bei einem Prüfklima von 23 °C +/- 1 °C Temperatur und 50 % +/- 5 % rel. Luftfeuchte.

Ein 20 mm breiter Streifen einer auf Polyester als Schicht aufgetragenen Acrylathaftklebemasse wurde auf Stahlplatten aufgebracht, die zuvor zweimal mit Aceton sowie einmal mit Isopropanol gewaschen wurden und danach 5 Minuten an der Luft liegen gelassen, damit das Lösungsmittel abdampfen kann. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen. Analog wurde die Klebkraft auf Polyethylen (PE) und Lack bestimmt. Als Lack wurde jeweils der Lack Uregloss^{®} Colorless (Produkt-Nr. FF79-0060 0900) der Fa. BASF verwendet.

### Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C +/- 1 °C, 55 % +/- 5 % Luftfeuchtigkeit) und bei 70 °C in einem Wärmeschrank durchgeführt, wobei für diese Messung die Probe mit einem Gewicht von 0,5 kg belastet wurde.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

### Kommerziell erhältliche, eingesetzte Chemikalien

| *Chemische Verbindung* | *Handelsname* | *Hersteller* | *CAS-Nr.* |
|---|---|---|---|
| 1,3-Butadien, Homopolymer, hydriert, hydroxy-terminiert, Monomethacrylat | L-1253 | Kuraray | 260057-97-4 |
| Isostearylacrylat | ISTA | ISA Co., Ltd. | 93841-48-6 |
| 2,2'-Azobis(2-methylbutyronitril) | Vazo^{®} 67 | DuPont | 13472-08-7 |
| Bis-(4-*tert-*butylcyclohexyl)peroxydicarbonat | Perkadox^{®} 16 | Akzo Nobel | 15520-11-3 |
| Kohlenwaserstoffharz (auf C₅-Basis, geringer Aromatenanteil, Erweichungspunkt (Ring & Ball) 94°C) | Piccotac^{®} 1095-N | Eastman | - |
| flüssiges Kohlenwasserstoffharz (C₅-Basis) | Wingtack^{®} 10 | Cray Valley | 26813-14-9 |
| Hydriertes flüssiges Polyisopren | LIR-290 | Kuraray | 151789-04-7 |
| Terpenphenolharz (Erweichungspunkt 110 °C; M_{w} = 500 - 800 g/mol; D = 1,50) | Dertophene^{®} T110 | DRT resins | 25359-84-6 |
| Aluminium acetylacetonat | - | Sigma-Aldrich | 13963-57-0 |

### I Herstellung der Kammcopolymere (A) - P1 bis P4

Im Folgenden wird die Präparation der beispielhafter Kammcopolymere (A) näher beschrieben.

### Beispiel P1:

Ein für radikalische Polymerisationen konventioneller 100 L-Glasreaktor wurde mit 1,2 kg Acrylsäure (AS, 3 %), 20,97 kg 2-Ethylhexylacrylat (EHA, 52,43 %), 9,83 kg Butylacrylat (BA, 24,57 %), 4,0 kg Isobornylacrylat (IBOA, 10 %), 4,0 kg Makromer L-1253 (10 %) und 20,8 kg Aceton/ Benzin 60/95 (1:1) befüllt. Nach 45minütiger Durchleitung von Stickstoffgas unter Rühren wurde der Reaktor auf 58°C hochgeheizt und 0,8 kg Vazo^{®} 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,8 kg Vazo^{®} 67 hinzugegeben. Über einen Zeitraum von 5 h (gerechnet ab der letzten Zugabe von Vazo^{®}67) wurde jeweils stündlich je nach Viskositätsanstieg mit jeweils 5,0 bis 10,0 kg Benzin 60/95 verdünnt, so dass eine ausreichende Durchmischung gewährleistet war. Zur Reduktion der Restmonomere wurden nach 6 und nach 7 h nach Reaktionsstart jeweils 1,5 kg Bis-(4-*tert*-butylcyclohexyl)peroxydicarbonat hinzugegeben und zwischendurch noch mit 15 kg Benzin 60/95 verdünnt. Die Reaktion wurde nach 24 h Reaktionszeit durch Abkühlen auf Raumtemperatur abgebrochen.

### Kammcopolymere (A) - P2 bis P4 (Vergleichsbeispiele)

Die Herstellung der Hybridpolymere P2 bis P4 erfolgte analog dem Beispiel P1. Die prozentualen Massenangaben der jeweils verwendeten Monomere sind in Tabelle 1 aufgeführt.

**Tabelle 1: Kammcopolymere P2 bis P4**

| | **2 (Vgl.)** | **3 (Vgl.)** | **4 (Vgl.)** |
|---|---|---|---|
| AS | 3,0 % | 5,0 % | 5,0 % |
| BA | 26,9 % | 25,5 % | 25,5 % |
| EHA | 60,1 % | 54,5 % | 54,5 % |
| IBOA | - | - | - |
| ISTA | - | - | 5,0 % |
| L-1253 | 10,0 % | 15,0 % | 10,0 % |

| | | | |
|---|---|---|---|
| Vgl. - Vergleichsbeispiel | | | |

In Tabelle 2 sind jeweils die mittels GPC gemessenen Molmassenverteilungen und mittels DSC gemessenen statischen Glasübergangstemperaturen der Kammcopolymere P1 bis P4 dargestellt.

**Tabelle 2: Polymerdaten Polymere P1 bis P4**

| | Mₙ [g/mol]^{a)} | M_{w} [g/mol]^{a)} | PD [-]^{a)} | stat. Tg₁ [°C]^{b)} | stat. Tg₂ [°C]^{b)} |
|---|---|---|---|---|---|
| **P1** | 64.800 | 1.570.000 | 24,23 | -67,7 | -39,6 |
| **P2 (Vgl.)** | 64.900 | 1.550.000 | 23,88 | -67,7 | -50,5 |
| **P3 (Vgl.)** | 58.700 | 1.670.000 | 28,44 | -67,7 | -49,4 |
| **P4 (Vgl.)** | 58.100 | 1.620.000 | 27,88 | -53,4 | -49,9 |

| | | | | | |
|---|---|---|---|---|---|
| ^{a)} Gemessen nach Messmethode A1. ^{b)}Gemessen nach Messmethode A2; Tg1 ist die durch das Kammcopolymer ausgebildete statische Glasübergangstemperatur der Kohlenwasserstoffphase; Tg2 ist die durch das Kammcopolymer ausgebildete statische Glasübergangstemperatur der Acrylatphase. | | | | | |

### II Herstellung der mehrphasigen Polymerzusammensetzungen PSA1 und PSA2 sowie der Vergleichsbeispiele V3 bis V11

Es wurden mehrphasige Polymerzusammensetzungen PSA1 und PSA2 sowie die Vergleichsbeispiele V3 bis V11 aus den Kammcopolymeren P1 bis P4 hergestellt. Dazu wurde das oben erhaltene Kammcopolymer jeweils auf einen Feststoffgehalt von 30 % mit Benzin verdünnt. Anschließend wurden 0,3 Gew.-% des Vernetzers Aluminium acetylacetonat und das bzw. die in Tabelle 3 genannten Harz(e) zu der Lösung hinzugegeben und auf eine 36 µm dicke PET-Folie (Kemafoil HPH 100, Fa. Covema) beschichtet und anschließend getrocknet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug jeweils 50 g/m².

Die Harzanteile sowie die statischen Glasübergangstemperaturen der Acrylat- und der Kohlenwasserstoffphasen der mehrphasigen Polymerzusammensetzungen sind in Tabelle 3, die klebtechnischen Daten der Beispiele PSA1 bis PSA9 sowie der Vergleichsbeispiele sind in der Tabelle 4 aufgeführt.

**Tabelle 4: Klebtechnische Daten der mehrphasigen Polymerzusammensetzungen PSA1 und PSA2 sowie der Vergleichsbeispiele V3 bis V11**

| **Bsp.** | KK sofort Stahl [N/cm] | KK sofort FF-79 [N/cm] | KK sofort PE [N/cm] | SSZ RT [min] |
|---|---|---|---|---|
| **PSA 1** | 9,54 | 6,7 | 5,14 | 10.000 |
| **PSA 2** | 9,65 | 6,2 | 6,12 | 10.000 |
| **V3** | 10,83 | 9,36 | 6,98 | 10.000 |
| **V4** | 12,79 | 10,52 | 5,89 | 10.000 |
| **V5** | 15,74 | 15,39 | 7,56 | 7.200 (K) |
| **V6** | 15,44 | 14,89 | 8,21 | 9.805 (K) |
| **V7** | 14,53 | 12,21 | 7,22 | 10.000 |
| **V8** | 15,36 | 14,99 | 7,87 | 7108 (K) |
| **V9** | 15,95 | 15,64 | 8,01 | 10.000 |
| **V10** | 5,23 | 2,6 | 1,31 | 8.453 (A) |
| **V11** | 8,63 | 6,7 | 4,42 | 3.682 (A) |

Die Messungen Klebkraft (KK) sofort erfolgten gemäß Messmethode H1, die Messungen der Scherstandszeiten (SSZ) bei Raumtemperatur erfolgte gemäß Messmethode H2. A: Adhäsionsbruch, K: Kohäsionsbruch.

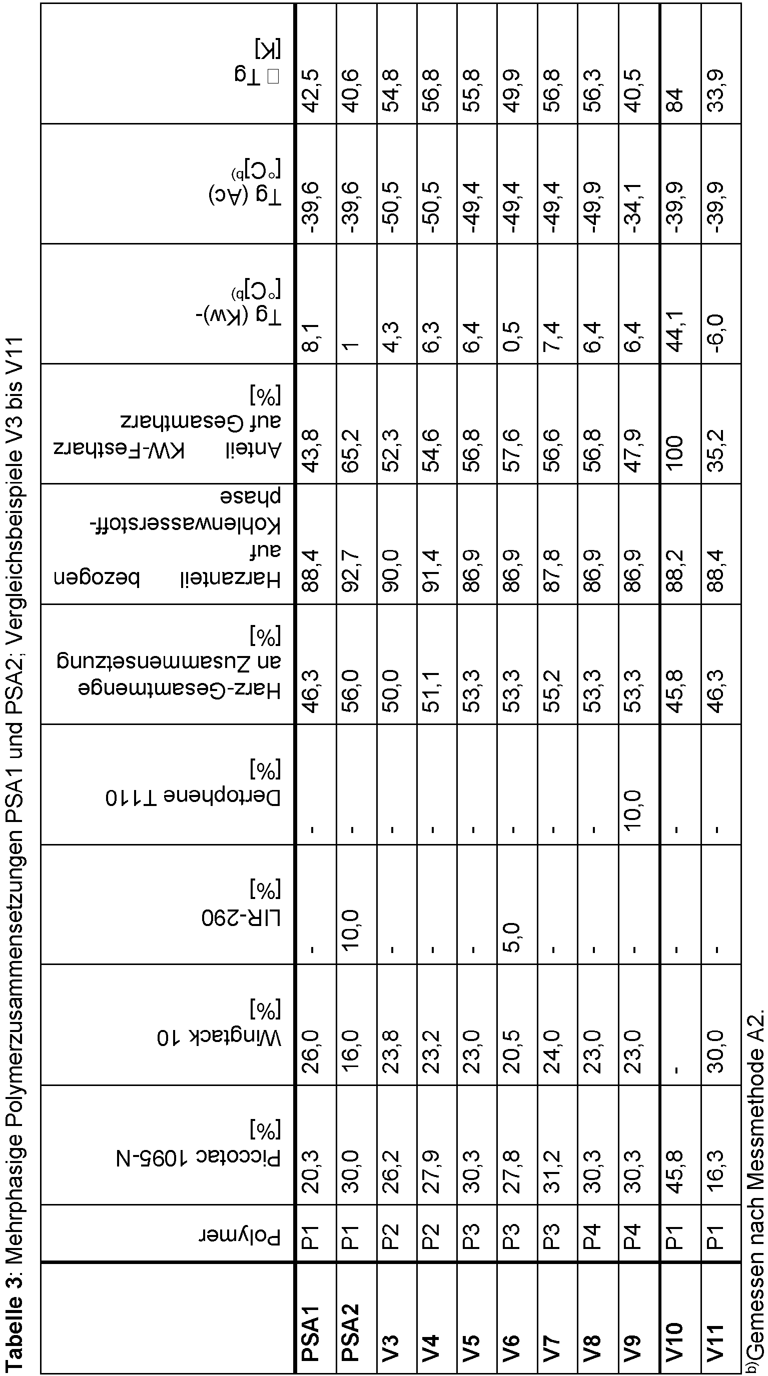

Die Vergleichsbeispiele V10 und V11 veranschaulichen die Kombination der der Kammcopolymere (A) mit einer unvorteilhaften statischen Glasübergangstemperatur der Kohlenwasserstoffphase der Zusammensetzung sowie einem unvorteilhaften Glasübergangstemperaturunterschied zwischen der Acrylat- und der Kohlenwasserstoffphase.

### III Aufziehverhalten der mehrphasigen Polymerzusammensetzungen PSA1 und PSA2 sowie der Vergleichsbeispiele V3 bis V11

Das Aufziehverhalten der erfindungsgemäßen Zusammensetzungen sowie der Vergleichsbeispiele ist in der Tabelle 5 aufgeführt.

**Tabelle 5: Aufziehverhalten**

| **Bsp.** | KK sofort Stahl [N/cm] | KK 3 min Stahl [N/cm] | KK 1 d Stahl [N/cm] | KK 3 d Stahl [N/cm] |
|---|---|---|---|---|
| **PSA 1** | 9,54 | 9,60 | 9,62 | 9,61 |
| **PSA 2** | 9,65 | 9,58 | 9,62 | 9,64 |
| **V3** | 10,83 | 10,88 | 10,92 | 10,92 |
| **V4** | 12,79 | 12,80 | 12,75 | 12,77 |
| **V5** | 15,74 | 15,62 | 15,74 | 15,72 |
| **V6** | 15,44 | 15,62 | 15,65 | 15,67 |
| **V7** | 14,53 | 14,21 | 14,22 | 14,36 |
| **V8** | 15,36 | 15,99 | 15,87 | 15,92 |
| **V9** | 15,95 | 15,96 | 15,97 | 15,81 |
| **V10** | 5,23 | 5,87 | 6,31 | 6,78 |
| **V11** | 8,63 | 8,7 | 8,95 | 9,78 |

Anhand der Ergebnisse ist zu erkennen, dass die nicht erfindungsgemäßen Zusammensetzungen V10 und V11 eine ausreichende Benetzung der Oberfläche erst mit der Zeit ausbilden, wodurch die Klebkraft erst mit der Zeit zunimmt, wohingegen die erfinderischen Beispiele eher ein Kautschuk-artiges Verhalten zeigen und die Oberfläche sofort gut benetzen.

## Patentansprüche

1. Mehrphasige Polymerzusammensetzung, umfassend
- ein Kammcopolymer (A), das erhältlich ist durch Polymerisation eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, und das eine kontinuierliche Acrylatphase und eine diskontinuierliche Kohlenwasserstoffphase Kw ausbildet,
- und wenigstens eine in der Kohlenwasserstoffphase Kw des Kammcopolymers (A) lösliche Kohlenwasserstoffverbindung (B),
wobei die mehrphasige Polymerzusammensetzung eine kontinuierliche Acrylatphase mit einer statischen Glasübergangstemperatur Tg(Ac), gemessen nach der DSC Methode, und eine diskontinuierliche Kohlenwasserstoffphase Kw1 mit einer statischen Glasübergangstemperatur Tg(Kw1), gemessen nach der DSC Methode, aufweist, und wobei sich die statischen Glasübergangstemperaturen der Polymerzusammensetzung Tg(Kw1) und Tg(Ac) um 35 bis 60 Kelvin unterscheiden.

2. Polymerzusammensetzung gemäß Anspruch 1, **dadurch gekennzeichnet, dass** die statische Glasübergangstemperatur der diskontinuierlichen Kohlenwasserstoffphase innerhalb der Polymerzusammensetzung, Tg(Kw1), in einem Bereich von -5 bis +15 °C liegt.

3. Polymerzusammensetzung gemäß einem der vorhergehenden Ansprüche, **dadurch gekennzeichnet, dass** die statische Glasübergangstemperatur der kontinuierlichen Acrylatphase innerhalb der Polymerzusammensetzung, Tg(Ac), unterhalb von -10 °C liegt.

4. Polymerzusammensetzung gemäß einem der vorhergehenden Ansprüche, **dadurch gekennzeichnet, dass** das Makromer ein zahlenmittleres Molekulargewicht Mn, gemessen nach der GPC Methode, von 1.000 bis 500.000 g/mol aufweist.

5. Polymerzusammensetzung gemäß einem der vorhergehenden Ansprüche, **dadurch gekennzeichnet, dass** der Anteil des Kammcopolymers (A) 30-64 Gewichtsprozent, bezogen auf das Gesamtgewicht des Kammcopolymers (A) und der wenigstens einen Kohlenwasserstoffverbindung (B), ausmacht.

6. Polymerzusammensetzung gemäß einem der vorhergehenden Ansprüche, **dadurch gekennzeichnet, dass** die Makromereinheiten innerhalb des Kammcopolymers (A) 5-25 Gewichtsprozent, bezogen auf das Gesamtgewicht des Kammcopolymers (A), ausmachen.

7. Polymerzusammensetzung gemäß einem der vorhergehenden Ansprüche, **dadurch gekennzeichnet, dass** die Polymerisation in Anwesenheit wenigstens eines weiteren copolymerisierbaren Monomers durchgeführt wird, wobei dieses wenigstens eine weitere copolymerisierbare Monomer ausgewählt ist aus der Gruppe bestehend aus Itaconsäure, Itaconsäureanhydrid, Maleinsäure, Maleinsäureanhydrid, Vinylacetat, Vinylbutyrat, Vinylpropionat, Vinylisobutyrat, Vinylvalerat, Vinylversatate, N-Vinylpyrollidon und N-Vinylcaprolactam.

8. Polymerzusammensetzung gemäß einem der vorhergehenden Ansprüche, **dadurch gekennzeichnet, dass** die Polymerisation in Anwesenheit wenigstens eines weiteren nicht-polyolefinischen Makromers durchgeführt wird.

9. Polymerzusammensetzung gemäß einem der vorhergehenden Ansprüche, **dadurch gekennzeichnet, dass** die Kohlenwasserstoffverbindung (B) ein Kohlenwasserstoffharz mit einem zahlenmittleren Molekulargewicht Mn von 1.000 g/mol oder weniger ist, gemessen nach der GPC Methode.

10. Polymerzusammensetzung gemäß einem der vorhergehenden Ansprüche, **dadurch gekennzeichnet, dass** die Kohlenwasserstoffverbindung (B) ein Weichharz und/oder ein Festharz umfasst.

11. Polymerzusammensetzung gemäß einem der vorhergehenden Ansprüche, **dadurch gekennzeichnet, dass** die Polymerzusammensetzung zusätzlich eine weitere Kohlenwasserstoffverbindung (C) enthält, deren zahlenmittleres Molekulargewicht Mn, gemessen nach der GPC Methode mehr als 1.000 g/mol beträgt, und wobei die Polymerzusammensetzung eine statische Glasübergangstemperatur Tg(C) aufweist, die zwischen den Glasübergangstemperaturen der kontinuierlichen Acrylatphase, Tg(Ac), und der diskontinuierlichen Kohlenwasserstoffphase, Tg(Kw), liegt.

12. Polymerzusammensetzung gemäß einem der vorhergehenden Ansprüche, **dadurch gekennzeichnet, dass** die Polymerzusammensetzung zusätzlich wenigstens ein Additiv, ausgewählt aus der Gruppe bestehend aus Weichmachern, Ölen und in der Acrylatphase des Kammcopolymers löslichen Harzen enthält.

13. Polymerzusammensetzung gemäß einem der vorhergehenden Ansprüche, **dadurch gekennzeichnet, dass** die Menge der Kohlenwasserstoffverbindung (B) und, falls vorhanden, der Kohlenwasserstoffverbindung (C) 80 Gewichtprozent oder mehr, bezogen auf den Gesamtanteil der diskontinuierlichen Kohlenwasserstoffphase innerhalb der Polymerzusammensetzung, beträgt.

14. Verfahren zur Herstellung einer mehrphasigen Polymerzusammensetzung gemäß einem der vorhergehenden Ansprüche, umfassend die Schritte
- Polymerisieren eines Gemischs enthaltend Acrylsäure, Butylacrylat, 2-Ethylhexylacrylat und Isobornylacrylat in Gegenwart wenigstens eines Makromers, ausgewählt aus der Gruppe bestehend aus polymerisierbaren Ethylen-Butylen-, Ethylen-Propylen-, Ethylen-Butylen-Propylen- und Isobutylen-Makromeren, unter Ausbildung eines Kammcopolymers (A) mit einer Acrylat-Hauptkette und Kohlenwasserstoff-Seitenketten;
- Mischen des so erhaltenen Kammcopolymers (A) mit wenigstens einer Kohlenwasserstoffverbindung (B), die mit den Kohlenwasserstoff-Seitenketten des Kammcopolymers (A) kompatibel ist.

15. Haftklebmasse, umfassend eine mehrphasige Polymerzusammensetzung gemäß einem der Ansprüche 1-13.

16. Verwendung der Haftklebmasse gemäß Anspruch 15 zur Verklebung von Gegenständen.

## Claims

1. Multiphase polymer composition comprising
- a comb copolymer (A) which is obtainable by polymerizing a mixture containing acrylic acid, butyl acrylate, 2-ethylhexyl acrylate and isobornyl acrylate in the presence of at least one macromer selected from the group consisting of polymerizable ethylene-butylene, ethylene-propylene, ethylene-butylene-propylene and isobutylene macromers, and which forms a continuous acrylate phase and a discontinuous hydrocarbon phase Kw,
- and at least one hydrocarbon compound (B) soluble in said hydrocarbon phase Kw of said comb copolymer (A),
wherein the multiphase polymer composition comprises a continuous acrylate phase having a static glass transition temperature Tg(Ac), as measured by the DSC method, and a discontinuous hydrocarbon phase Kw1 having a static glass transition temperature Tg(Kw1), as measured by the DSC method, and wherein the said static glass transition temperatures Tg(Kw1) and Tg(Ac) of the polymer composition differ by 35 to 60 kelvins.

2. Polymer composition according to Claim 1, **characterized in that** the static glass transition temperature of the discontinuous hydrocarbon phase within the polymer composition, Tg(Kw1), is in a range from -5 to +15°C.

3. Polymer composition according to either of the preceding claims, **characterized in that** the static glass transition temperature of the continuous acrylate phase within the polymer composition, Tg(Ac), is below -10°C.

4. Polymer composition according to any of the preceding claims, **characterized in that** the macromer has a number average molecular weight Mn, as measured by the GPC method, of 1000 to 500 000 g/mol.

5. Polymer composition according to any of the preceding claims, **characterized in that** said comb copolymer (A) comprises 30-64 weight percent, based on the combined weight of comb copolymer (A) and the at least one hydrocarbon compound (B).

6. Polymer composition according to any of the preceding claims, **characterized in that** the macromer units within said comb copolymer (A) comprise 5-25 weight percent, based on the total weight of comb copolymer (A).

7. Polymer composition according to any of the preceding claims, **characterized in that** the polymerization is carried out in the presence of at least one further copolymerizable monomer, wherein this at least one further copolymerizable monomer is selected from the group consisting of itaconic acid, itaconic anhydride, maleic acid, maleic anhydride, vinyl acetate, vinyl butyrate, vinyl propionate, vinyl isobutyrate, vinyl valerate, vinyl versatate, N-vinylpyrrolidone and N-vinylcaprolactam.

8. Polymer composition according to any of the preceding claims, **characterized in that** the polymerization is carried out in the presence of at least one further non-polyolefinic macromer.

9. Polymer composition according to any of the preceding claims, **characterized in that** said hydrocarbon compound (B) is a hydrocarbon resin having a number average molecular weight Mn of 1000 g/mol or less, as measured by the GPC method.

10. Polymer composition according to any of the preceding claims, **characterized in that** said hydrocarbon compound (B) comprises a soft resin and/or a hard resin.

11. Polymer composition according to any of the preceding claims, **characterized in that** the polymer composition further comprises a further hydrocarbon compound (C) whose number average molecular weight Mn, as measured by the GPC method, is more than 1000 g/mol, and wherein the polymer composition has a static glass transition temperature Tg(C) between the glass transition temperatures of the continuous acrylate phase, Tg(Ac), and of the discontinuous hydrocarbon phase, Tg(Kw).

12. Polymer composition according to any of the preceding claims, **characterized in that** the polymer composition further comprises at least one additive selected from the group consisting of plasticizers, of oils and of resins soluble in the acrylate phase of the comb copolymer.

13. Polymer composition according to any of the preceding claims, **characterized in that** the amount of said hydrocarbon compound (B) and, if present, of said hydrocarbon compound (C) comprises 80 weight percent or more, based on the total proportion of the discontinuous hydrocarbon phase within the polymer composition.

14. Method of preparing a multiphase polymer composition according to any of the preceding claims, said method comprising the steps of
- polymerizing a mixture containing acrylic acid, butyl acrylate, 2-ethylhexyl acrylate and isobornyl acrylate in the presence of at least one macromer selected from the group consisting of polymerizable ethylene-butylene, ethylene-propylene, ethylene-butylene-propylene and isobutylene macromers to form a comb copolymer (A) having an acrylate main chain and hydrocarbon side chains;
- mixing said comb copolymer (A) thus obtained with at least one hydrocarbon compound (B) which is compatible with the hydrocarbon side chains of said comb copolymer (A).

15. Pressure-sensitive adhesive comprising a multiphase polymer composition according to any of Claims 1 to 13.

16. Method of using the pressure-sensitive adhesive according to Claim 15 to bond articles.

## Revendications

1. Composition polymère multiphase comprenant :
- un copolymère en peigne (A), qui peut être obtenu par polymérisation d'un mélange contenant de l'acide acrylique, de l'acrylate de butyle, de l'acrylate de 2-éthylhexyle et de l'acrylate d'isobornyle en présence d'au moins un macromère, choisi dans le groupe constitué par des macromères polymérisables d'éthylène-butylène, d'éthylène-propylène, d'éthylène-butylène-propylène et d'isobutylène, et qui forme une phase continue d'acrylate et une phase discontinue hydrocarbonée Kw,
- et au moins un composé hydrocarboné (B) soluble dans la phase hydrocarbonée Kw du copolymère en peigne (A),
la composition polymère multiphase présentant une phase continue d'acrylate présentant une température de transition vitreuse statique Tg(Ac), mesurée selon la méthode par DSC (calorimétrie différentielle à balayage), et une phase discontinue hydrocarbonée Kw1 présentant une température de transition vitreuse statique Tg(Kw1), mesurée selon la méthode par DSC, et les températures de transition vitreuse statiques de la composition polymère Tg(Kw1) et Tg(Ac) se distinguant de 35 à 60 Kelvins.

2. Composition polymère selon la revendication 1, **caractérisée en ce que** la température de transition vitreuse statique de la phase discontinue hydrocarbonée au sein de la composition polymère, Tg(Kw1), se situe dans une plage de -5 à +15°C.

3. Composition polymère selon l'une des revendications précédentes, **caractérisée en ce que** la température de transition vitreuse statique de la phase continue d'acrylate au sein de la composition polymère, Tg(Ac), est inférieure à -10°C.

4. Composition polymère selon l'une des revendications précédentes, **caractérisée en ce que** le macromère présente un poids moléculaire moyen en nombre Mn, mesuré selon la méthode par CPG, de 1000 à 500.000 g/mole.

5. Composition polymère selon l'une des revendications précédentes, **caractérisée en ce que** la proportion du copolymère en peigne (A) représente 30-64% en poids, par rapport au poids total du copolymère en peigne (A) et dudit au moins un composé hydrocarboné (B).

6. Composition polymère selon l'une des revendications précédentes, **caractérisée en ce que** les motifs macromères au sein du copolymère en peigne (A) représentent 5-25% en poids, par rapport au poids total du copolymère en peigne (A).

7. Composition polymère selon l'une des revendications précédentes, **caractérisée en ce que** la polymérisation est réalisée en présence d'au moins un autre monomère copolymérisable, cet au moins un autre monomère copolymérisable étant choisi dans le groupe constitué par l'acide itaconique, l'anhydride de l'acide itaconique, l'acide maléique, l'anhydride de l'acide maléique, l'acétate de vinyle, le butyrate de vinyle, le propionate de vinyle, l'isobutyrate de vinyle, le valérate de vinyle, le versatate de vinyle, la N-vinylpyrrolidone et le N-vinylcaprolactame.

8. Composition polymère selon l'une des revendications précédentes, **caractérisée en ce que** la polymérisation est réalisée en présence d'au moins un autre macromère non polyoléfinique.

9. Composition polymère selon l'une des revendications précédentes, **caractérisée en ce que** le composé hydrocarboné (B) est une résine hydrocarbonée présentant un poids moléculaire moyen en nombre Mn de 1000 g/mole ou moins, mesuré selon la méthode par CPG.

10. Composition polymère selon l'une des revendications précédentes, **caractérisée en ce que** le composé hydrocarboné (B) comprend une résine molle et/ou une résine solide.

11. Composition polymère selon l'une des revendications précédentes, **caractérisée en ce que** la composition polymère contient en outre un autre composé hydrocarboné (C) dont le poids moléculaire moyen en nombre Mn, mesuré selon la méthode par CPG, est supérieur à 1000 g/mole et la composition polymère présentant une température de transition vitreuse statique Tg(C) qui est située entre les températures de transition vitreuse de la phase continue d'acrylate, Tg(Ac), et de la phase discontinue hydrocarbonée, Tg(Kw).

12. Composition polymère selon l'une des revendications précédentes, **caractérisée en ce que** la composition polymère contient en outre au moins un additif, choisi dans le groupe constitué par les plastifiants, les huiles et les résines solubles dans la phase d'acrylate du copolymère en peigne.

13. Composition polymère selon l'une des revendications précédentes, **caractérisée en ce que** la quantité du composé hydrocarboné (B) et, le cas échéant, du composé hydrocarboné (C) représente 80% en poids ou plus, par rapport à la proportion totale de la phase discontinue hydrocarbonée au sein de la composition polymère.

14. Procédé pour la préparation d'une composition polymère multiphase selon l'une des revendications précédentes, comprenant les étapes de :
- polymérisation d'un mélange contenant de l'acide acrylique, de l'acrylate de butyle, de l'acrylate de 2-éthylhexyle et de l'acrylate d'isobornyle en présence d'au moins un macromère, choisi dans le groupe constitué par des macromères polymérisables d'éthylène-butylène, d'éthylène-propylène, d'éthylène-butylène-propylène et d'isobutylène avec formation d'un copolymère en peigne (A) présentant une chaîne principale d'acrylate et des chaînes latérales hydrocarbonées ;
- mélange du copolymère en peigne (A) ainsi obtenu avec au moins un composé hydrocarboné (B) qui est compatible avec les chaînes latérales hydrocarbonées du copolymère en peigne (A).

15. Masse autoadhésive comprenant une composition polymère multiphase selon l'une des revendications 1-13.

16. Utilisation de la masse autoadhésive selon la revendication 15 pour le collage d'objets.
